Europäisches Patentamt

European Patent Office

Office européen des brevets

(11) Veröffentlichungsnummer: **0 338 198 B1**

(12) **EUROPÄISCHE PATENTSCHRIFT**

(19)

(45) Veröffentlichungstag der Patentschrift: **11.11.92**

(21) Anmeldenummer: **89102005.9**

(22) Anmeldetag: **06.02.89**

(51) Int. Cl.⁵: **B01D 21/00**, B01D 21/06, C02F 3/12

(54) Absetzbehälter für eine Belebtschlamm-Abwasser-Suspension.

(30) Priorität: **16.04.88 DE 3812715**

(43) Veröffentlichungstag der Anmeldung:
**25.10.89 Patentblatt 89/43**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
DE-A- 2 301 718
FR-A- 2 342 254
US-A- 4 054 514

(73) Patentinhaber: **DEUTSCHE BABCOCK- BORSIG
AKTIENGESELLSCHAFT
Egellsstrasse 21
W-1000 Berlin 27(DE)**

(72) Erfinder: **Turgay, Hüdai
Feldstrasse 11
W-1000 Berlin 27(DE)**

(74) Vertreter: **Müller, Jürgen, Dipl.-Ing.
Deutsche Babcock AG Lizenz- und Patentabteilung Duisburger Strasse 375
W-4200 Oberhausen 1(DE)**

# Beschreibung

Die Erfindung betrifft einen Absetzbehälter zur Abtrennung von Belebtschlamm aus einer Abwasser-Belebtschlamm-Suspension mit den Merkmalen des Oberbegriffes des Anspruches 1. Ein solcher Absetzbehälter ist aus US-A-4 054 514 bekannt.

Der Absetzbehälter kann Teil einer Anlage gemäß DE-A-3 151 153 zur Behandlung von Abwasser mit Hilfe von Belebtschlamm unter Zufuhr von Sauerstoff sein. Aus der in einem Reaktor behandelten Suspension aus Abwasser und Belebtschlamm muß anschließend letzterer abgetrennt werden, was in dem Absetzbehälter geschieht.

Aus der DE-C-516 439 ist eine Vorrichtung der gattungsgemäßen Art bekannt, die zur Abscheidung von Sinkstoffen, Schwimmstoffen und Gasen aus Flüssigkeiten dient. Bei diesem Absetz- und Trennbehälter wird durch die tangentiale Zuführung in dem sich unterhalb des Flüssigkeitsspiegels befindlichen zentralen Rohr der verunreinigten Flüssigkeit eine Rotationsbewegung aufgezwungen. Dadurch werden die Gase, der Schaum und die leichteren Schwimmstoffe zur Mitte des Rohres gedrängt und steigen dort nach oben. Das Wasser mit den schwereren Sinkstoffen wandert an der Innenwand des Rohres spiralförmig nach oben und tritt über den Rand des Rohres in den eigentlichen Absetzraum aus. Auf Grund ihres Aufbaus ist die bekannte Vorrichtung nicht in der Lage, den Belebtschlamm aus einer Belebtschlamm-Abwasser-Suspension wirksam abzutrennen. So müßten die Gase, die in dem unterhalb des Flüssigkeitsspiegels befindlichen zentralen Rohr freigesetzt werden, gegen den Druck der auf dem Rohr ruhenden Flüssigkeitssäule aufsteigen. Dabei besteht die Gefahr, daß die Gase in den Bakterienagglomeraten festgehalten werden und mit diesen einen schwimmfähigen, schwer abzutrennenden Schlamm bilden. Wird weiterhin die Rotationsbewegung in der Suspension allein durch deren tangentialen Einlauf erzeugt, so darf eine minimale, von der Zulaufmenge abhängige, Einströmgeschwindigkeit in das Rohr nicht unterschritten werden. Bei einer zu geringen Zulaufmenge würde sich der Belebtschlamm in dem unteren Teil des Rohres ansammeln und zu Verstopfungen führen.

Der Erfindung liegt die Aufgabe zugrunde, den gattungsgemäßen Absetzbehälter derart zu gestalten, daß der Belebtschlamm wirksam und auf engem Raum abgetrennt werden kann.

Diese Aufgabe wird bei einem gattungsgemäßen Absetzbehälter erfindungsgemäß durch die kennzeichnenden Merkmale des Anspruches 1 gelöst. Vorteilhafte Ausgestaltungen der Erfindung sind in den Unteransprüchen angegeben.

Bei dem erfindungsgemäßen Absetzbehälter schleudert das Rührwerk die Suspension aus, wodurch die bestehenden Bakterienagglomerate in kleinere zerlegt werden. Die zwischen den Bakterien vorhandenen Gasblasen werden freigesetzt und steigen entlang einer durch die Oberfläche des Rotationsparaboloids gegebenen Phasengrenzfläche zwischen der Suspension und der Außenatmosphäre auf. Dabei ist die Höhe, die die Gasblasen innerhalb der Flüssigkeit bis zur Phasengrenzfläche aufsteigen müssen, gering. Die Entgasung der Belebtschlamm-Abwasser-Suspension ist daher bei dem Verlassen des zentralen Rohres nahezu vollständig abgeschlossen. Nach dem Austritt aus dem zentralen Rohr finden sich in der Suspension die Bakterien erneut zu Agglomeraten zusammen, die jedoch gegenüber dem Ausgangszustand größer und nahezu frei von Gasblasen sind, wodurch die Absetzung des Belebtschlammes und damit die Trennung vom Wasser stark beschleunigt wird. Durch diese Beschleunigung der Abtrennung kann das Bauvolumen des Absetzbehälters vergleichsweise gering gehalten werden. Die Rotationsbewegung der Suspension wird durch ein extern regelbares Aggregat in Form des Rührwerkes herbeigeführt und kann damit unabhängig von der Durchsatzmenge und abhängig von der Viskosität der Suspension eingestellt werden.

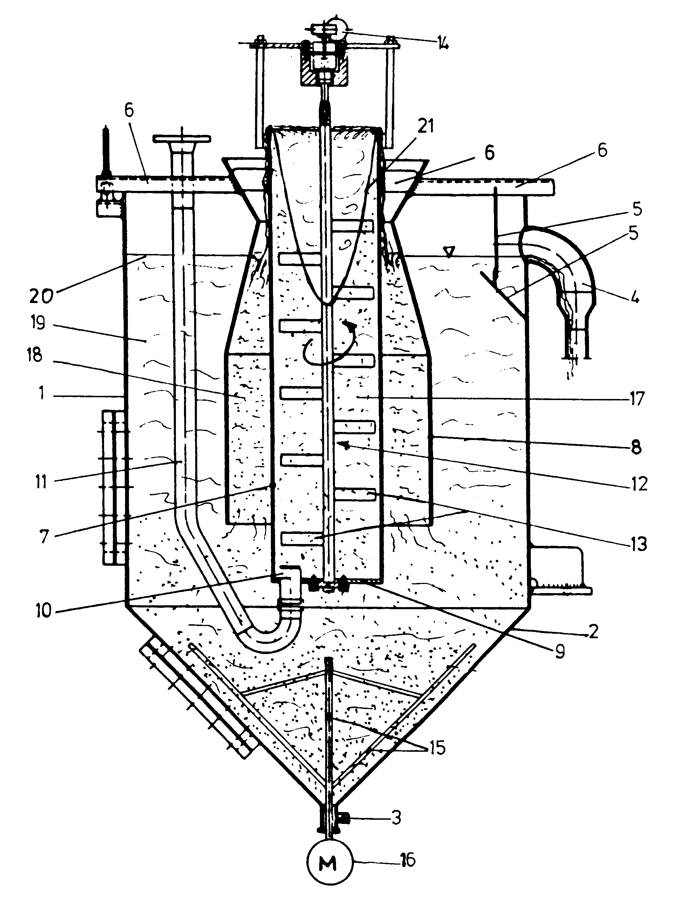

Ein Ausführungsbeispiel der Erfindung ist in der Zeichnung dargestellt und wird im folgenden näher erläutert. Die Zeichnung gibt den Längsschnitt durch einen Absetzbehälter wieder.

Der Absetzbehälter besteht aus einem vorzugsweise zylindrischen Mantel 1. Der untere Teil des Mantels 1 ist als Trichter 2 ausgebildet, der in einem Auslauf 3 endet. In dem oberen Teil des Mantels 1 ist ein Ablauf 4 vorgesehen. Vor dem Ablauf 4 ist eine Sperre 5 für Feststoffe angeordnet. In der Ebene des Ablaufes 4 stellt sich in dem Absetzbehälter ein Flüssigkeitsspiegel 20 ein.

In dem Absetzbehälter ist zentral ein oben offenes und unten durch einen Boden 9 geschlossenes Rohr 7 angeordnet, das kurz oberhalb des Trichters 2 endet. Unmittelbar oberhalb des Bodens 9 mündet in das zentrale Rohr 7 tangential ein Einlaß 10 ein, dessen Querschnitt geringer ist als der des zentralen Rohres 7. Der Einlaß 10 ist mit einem durch das Behälterinnere geführten Zulauf 11 verbunden. Das obere, offene Ende des zentralen Rohres 7 ragt über den Flüssigkeitsspiegel 20 hinaus und steht damit mit der Außenatmosphäre in Verbindung.

Das zentrale Rohr 7 ist in einem solchen Abstand von einem zweiten Rohr 8 umgeben, daß der Querschnitt des Ringraumes 18 zwischen den Rohren 7, 8 größer ist als der Querschnitt des Rohres 7. Das Rohr 8 ragt mit seinem einen Ende über den Flüssigkeitsspiegel 20 hinaus, während das untere Ende des Rohres 8 sich unterhalb des Flüssigkeitsspiegels 20 in der Nähe des Trichters 2 befindet. Die Rohre 7, 8 sind über drei Streben 6 an dem Mantel 1 befestigt.

In dem zentralen Rohr 7 ist ein Rührwerk 12 vorgesehen, das aus einer senkrecht angeordneten Welle besteht, auf der Flügel 13 befestigt sind. Die Welle ragt aus dem oberen Ende des zentralen Rohres 7 heraus und ist an einen Motor 14 gekuppelt. Die Drehgeschwindigkeit des Rührwerkes 12 ist veränderbar und richtet sich nach der Viskosität der Suspension innerhalb des Rohres 7. Die Drehgeschwindigkeit wird so eingestellt, daß die Suspension in dem oberen Teil des Rohres 7 ein Rotationsparaboloid 21 mit einer Höhe von etwa 1 m bildet. Aus diesem Rotationsparaboloid 21 tritt die Suspension über den oberen Rand des Rohres 7 aus.

In dem Trichter 2 befindet sich ein zweites Rührwerk 15, das von einem separaten Motor 16 angetrieben ist.

In einem nicht gezeigten, gemäß der DE-A-3 151 153 ausgebildeten Reaktor wird Abwasser mit Belebtschlamm unter Sauerstoffzufuhr bei ständiger Durchmischung mit Hilfe von heb- und senkbaren Lochplatten behandelt. Aus dem Reaktor tritt eine aus Belebtschlamm und Abwasser bestehende Suspension aus und gelangt über den Zulauf 11 in den beschriebenen Absetzbehälter. Die Suspension tritt durch den Einlaß 10 tangential am tiefsten Punkt in das zentrale Rohr 7 ein, das den zuerst durchströmten Raum darstellt, der als Entgasungs- und Entspannungsraum 17 wirkt. Durch das Rührwerk 12 wird die Suspension gegen die Innenwand des zentralen Rohres 7 geschleudert, wobei sich in dessen oberen Teil das Rotationsparaboloid 21 ausbildet. Während des Schleuderns werden die Bakterienagglomerate des Belebtschlammes zerlegt und die zwischen den Bakterien noch vorhandenen Gase freigesetzt. Diese Gase treten als Gasbläschen entlang der durch die Oberfläche des Rotationsparaboloids 21 gebildeten Phasengrenzfläche aus. Eine weitgehend entgaste Suspension quillt über den oberen Rand des zentralen Rohres 7 und gelangt in den Ringraum 18 zwischen den Rohren 7, 8, in dem die Suspension abwärts strömt. Hier finden sich die Bakterien zu neuen Agglomeraten zusammen. Diese sind gegenüber dem Ausgangszustand größer und weitgehend gasfrei. Durch die so bewirkte Erhöhung des Gewichtes der Bakterienagglomerate steigt deren Sinkgeschwindigkeit. Nach dem Verlassen des Ringraumes 18 wird der Flüssigkeitsstrom umgelenkt, wodurch sich der Belebtschlamm abtrennt und sich in dem Trichter 2 ansammelt. Hier wird der Belebtschlamm durch das zweite Rührwerk 15 verdichtet und über den Auslauf 3 abgezogen. Das vom Belebtschlamm befreite Wasser steigt in dem von dem zweiten Rohr 8 und dem Mantel 1 begrenzten Raum 19 auf und läuft über den Ablauf 4 ab. Da der Querschnitt des Ringraumes 18 größer ist als der des Entspannungsraumes 17 und der Querschnitt des Innenraumes 19 des Absetzbehälters wiederum größer ist als der Querschnitt des Ringraumes 18 steht der Suspension entlang des Strömungsweges bis zum Ablauf 4 ein sich vergrößernder Strömungsquerschnitt zur Verfügung. Die sich aus dieser Querschnittsvergrößerung ergebende Verminderung der Strömungsgeschwindigkeit beschleunigt zusammen mit der Erhöhung der Sinkgeschwindigkeit der Bakterienagglomerate das Absetzverhalten der zuvor entgasten Suspension.

## Patentansprüche

1. Absetzbehälter zur Abtrennung von Belebtschlamm aus einer Abwasser-Belebtschlamm-Suspension mit einem Zulauf (11) für die Suspension, mit einem in dem unteren, trichterförmig ausgebildeten Teil des Absetzbehälters angeordneten Auslaß (3) für den Belebtschlamm und mit einem im oberen Teil angeordneten Ablauf (4) für das von dem Belebtschlamm befreite Wasser, wobei in dem Absetzbehälter zentral ein oben offenes und unten durch einen Boden (9) geschlossenes, ein Rührwerk (12) aufnehmendes Rohr (7) angeordnet ist, in das in der Nähe des Bodens (9) ein mit dem Zulauf (11) verbundener Einlaß (10) einmündet und das in einem Abstand von einem zweiten beidseitig offenen, den in dem Absetzbehälter durch den Ablauf (4) vorgegebenen Flüssigkeitsspiegel (20) überragenden und unterhalb des Flüssigkeitsspiegels (20) endenden Rohr (8) umgeben ist, dadurch **gekennzeichnet,** daß das zentrale Rohr (7) den Flüssigkeitsspiegel (20) überragt und daß die veränderbare Drehgeschwindigkeit des Rührwerkes (12) auf einen solchen Wert eingestellt ist, daß die Suspension in dem oberen Teil des Rohres (7) ein bis zu dem Rand reichendes Rotationsparaboloid (21) bildet, aus dem die Suspension über den Rand tritt.

2. Absetzbehälter nach Anspruch 1, dadurch gekennzeichnet, daß das zentrale Rohr (7), das dieses umgebende zweite Rohr (8) und der dieses umgebende Mantel (1) des Absetzbehälters Räume (17, 18, 19) umschließen, die in vertikaler Richtung nacheinander im Gegenstrom durchströmt sind und von denen jeweils ein Raum ein größeres Volumen aufweist als der zuvor durchströmte Raum.

3. Absetzbehälter nach Anspruch 1 oder 2 dadurch gekennzeichnet, daß in dem trichterförmigen Teil ein zweites Rührwerk (15) angeordnet ist.

## Claims

1. Settling tank for the separation of activated sludge from a suspension of waste water and activated sludge, comprising a feed (11) for the suspension, an outlet (3) for the activated sludge and arranged in the lower part, which is constructed to be funnel-shaped, of the settling tank, and an outflow (4) arranged in the upper part and for the water freed of the activated sludge, wherein arranged centrally in the settling tank is an upwardly open pipe (7) which is downwardly closed by a base (9) and receives a stirring mechanism (12), into which pipe an inlet (10) connected with the feed (11) opens in the proximity of the base (9) and which pipe is surrounded at a spacing by a second pipe (8), which is open at both ends, projects above the liquid surface (20), predetermined by the outflow (4), in the settling tank and ends below the liquid surfce (20), characterised thereby that the central pipe (7) projects above the liquid surface (20) and that the variable rotational speed of the stirring mechanism (12) is set to such a value that the suspension in the upper part of the pipe (7) forms a paraboloid of revolution (21) which reaches up to the rim and from which the suspension overflows the rim.

2. Settling tank according to claim 1, characterised thereby that the central pipe (7), the second pipe (8) surrounding this and the jacket (1) surrounding this enclose the settling tank spaces (17, 18, 19), which are counter-currently flowed through one after the other in vertical direction and of which each space has a greater volume than the respective preceding space flowed through.

3. Settling tank according to claim 1 or 2, characterised thereby that a second stirring mechanism (15) is arranged in the funnel-shaped part.

## Revendications

1. Réservoir de décantation, pour la séparation de boue d'épuration provenant d'une suspension eau usée-boue d'épuration, avec une amenée (11) pour la suspension, avec une évacuation (3) de boue d'épuration, disposée dans la partie inférieure, en forme d'entonnoir, du réservoir de décantation, et avec une sortie (4), disposée en partie supérieure, pour l'eau débarrassée de la boue d'épuration, où, au centre, dans le réservoir de décantation, est disposé un tube (7), ouvert en partie haute et fermé en partie basse au moyen d'un fond (9) et recevant un agitateur (12), tube (7) dans lequel débouche, à proximité du fond (9), une entrée (10) reliée à l'amenée (11), et qui est entouré, à distance, par un deuxième tube (8), ouvert des deux côtés, montant dans le réservoir de décantation, plus haut que le niveau de liquide (20) prédéterminé par la sortie (4), et finissant au-dessous du niveau de liquide (20), caractérisé en ce que le tube central (7) monte plus haut que le niveau de liquide (20) et en ce que la vitesse de rotation modifiable de l'agitateur (12) est réglée à une valeur telle que la suspension forme dans la partie supérieure du tube (7) un paraboloïde de révolution (21) qui arrive jusqu'au bord au-dessus duquel la suspension sort.

2. Réservoir de décantation selon la revendication 1, caractérisé en ce que le tube central (7), le deuxième tube (8) qui entoure celui-ci et l'enveloppe (1) du réservoir de décantation, qui l'entoure, définissent des espaces (17,18,19) parcourus en direction verticale, les uns après les autres, à contre-courant, et chaque espace étant chaque fois plus grand que celui qui a été parcouru auparavant.

3. Réservoir de décantation selon la revendication 1 ou 2, caractérisé en ce qu'un deuxième agitateur 15 est disposé dans la partie en forme d'entonnoir.